# EUROPEAN PATENT SPECIFICATION

(11) **EP 1 327 192 B1**
(45) Date of publication and mention of the grant of the patent: **20.04.2005**
(21) Application number: 00973340.3
(22) Date of filing: 17.10.2000
(51) Int. Cl.: G06F 11/00, G06F 17/30, G06F 17/60

(54) **METHOD FOR ELIMINATING AND IDENTIFYING REDUNDANT MESSAGE INFORMATION**
VERFAHREN ZUR BESEITIGUNG UND IDENTIFIZIERUNG REDUNDANTER NACHRICHTENINFORMATIONEN
PROCEDE D'IDENTIFICATION ET D'ELIMINATION D'INFORMATIONS DE MESSAGES REDONDANTS

(43) Date of publication of application: 16.07.2003
(73) Proprietor: Kent Ridge Digital Labs, Singapore 119613 (SG)
(72) Inventor: KWOK, Chong, See, Singapore 574292 (SG); WONG, Lim, Soon, 53100 Kuala Lumpur (MY)
(74) Representative: Bogsch, Adam, Dipl.-Ing.
(86) International application number: PCT/SG2000/000178
(87) International publication number: WO 2002/033981

(56) References cited:
- EP-A- 0 089 831
- EP-A- 0 201 330
- WO-A-99/67731
- US-A- 5 031 218
- US-A- 5 799 304
- US-A- 5 862 333

## Description

### Technical Field of Invention

The present invention relates to the field of eliminating or identifying redundant information in an online system and more particularly to eliminating or minimising redundant email messages in a user's message file and eliminating or minimising redundant newsgroup postings in a user's newsgroup file.

### Background

With the advent of the Internet more and more people are communicating in electronic form such as via email messages, bulletin board systems and USENET groups. With this increased use of electronic communication, there has also become a greater degree of redundant messaging.

Not only is it irritating for a person to find multiple repeated messages in their email folder but it is a time consuming process for the person to read through all the messages and sort the relevant information from redundant information.

Redundant message may occur when messages are repeated in other messages. The following is an example that illustrates the rapid accumulation of email messages repeated in other messages:
From: clarice@hotmail.com.sg
To: mik@krdl.org.sg, ong@nus.edu.sg, chs@edb.gov.sg
Cc: judy@pacific.net.sg
Subject: Fw: Lunch on 30/7 (Friday)
Date: Fri, 30 Jul 1999 09:41:26 +0800
Dear All,
For the lunch today, please be informed that the venue has now been changed to Hua Ting Chinese Restaurant @ Orchard Hotel, 2nd Level (next to Delphi and opposite Orchard Parade). The time remains at 12.30 pm. Sorry for this late change.
Please page me at 1234-5678 if you need to contact me.
Regards
Clarice

--------
> From: clarice@hotmail.com.sg
> To: judy@pacific.net.sg; mik@krdl.org.sg; ong@nus.edu.sg;
> chs@edb.gov.sg
> Subject: Fw: Lunch on 30/7 (Friday)
> Date: Friday, July 23, 1999 10:45 PM
> Dear All
> I have booked a table for 4 (under Judy's name) at Lei
> Gardens, CHIJMES, for 30 July (Friday), 12.30 pm.
> Regards
> Clarice
> --------
> > From: judy@ pacific.net.sg
> > To: mik@krdl.org.sg
> > Cc: clarice@singnet.com.sg, ong@nus.edu.sg,
> > chs@edb.gov.sg
> > Subject: Re: Lunch on 30/7 (Friday)
> > Date: Thursday, July 22, 1999 7:02 PM
> > ok with me, will get clarice to book lei gardens at CHJMES
> > and inform the others.
> > cheers, judy.
> > --------
> > > From: mik@krdl.org.sg
> > > To: judy@pacific.net.sg
> > > CC: chs@edb.gov.sg, ong@nus.edu.sg,
> > > clarice@singnet.com.sg
> > > Subject: Re: Lunch on 30/7 (Friday)
> > > Date: Thursday, July 22, 1999 2:31 PM
> > >
> > > > mik, lei gardens is a good choice, but it is no longer at
> > > > boulevard - it is now at CHJMES or at orchard plaza,
> > > > which would be more convenient? What do you think?
> > >
> > > Didn't realize it moved. Haven't been to the CHJMES
> > > branch. I suggest we try that one.
> > > Mik.

The email message above quoted a second email message, which in turn quoted a third email message which quoted a fourth email message. These email messages were exchanged between Clarice, Judy, and Mik and "cc" to two other persons, Ong and CHS.

From the perspective of Ong and CHS, clearly the quoted email messages, if received separately, would be redundant. This is especially so if Ong and CHS were on leave and did not read their email messages until 30 July 2000 (the date the final message was sent).

A further way in which redundant messages may be generated, is when the same email message is sent to a person several times via several different routes, such as multiple mailing lists. The following is an example of redundant email messages being generated by such multiple mailing lists. John is the organiser of a database conference. He writes the following "call for participation" and posts it to the mailing lists "dbworld", "dbpl", and "irlist".
from: john@one.org
to: dbworld@wisconsin.edu dbpl@cis.upenn.edu
irlist@krdl.org.sg
subject: cfp---intemational conference on web databases
date: 10am 30 March 2000
International conference on Web Databases
   1 April 2000
   Holiday Inn at Timbaktu
   The International Conference on Web Databases will be held on 1 April 2000 at the Holiday Inn in Timbaktu. Please join the world's top researchers and developers at this fantastic meeting!

The three mailing lists are maintained autonomously by three different organizations. When John's email message reaches these three mailing lists, it is broadcast to all subscribers on each of these lists independently by the email messaging systems of these organizations.

Tom is a subscriber to all three mailing lists. He would therefore see John's "call for participation" three times, once from each mailing list. From Tom's perspective, any one of these three identical email messages would be sufficient and the other two redundant. There is therefore a need to identify and eliminate such redundancies.

Two other types of messaging systems that are explicitly oriented toward group discussion are bulletin board systems and USENET newsgroups. The problem of redundant messaging in these systems has been addressed by explicitly grouping messages together depending on the explicit discussion threads to which the messages are posted. In this regard, it is possible to delete an entire discussion thread in these systems. This deletion, however, is an all-or-nothing process. It is also to be appreciated that it is necessary for the user to initiate the deletion on a thread-by-thread basis.

The system disclosed in US patent 5905863, is a more advanced system for constructing message threads. This system concentrates on determining which email message is a response to which other email message. The document recognises that only using the "reply-to" field of an email message header does not yield reliable message threads because this particular field is only generated by an email system when the "reply" command of the email system is utilised. For example, a user may simply send a new message rather than using the "reply" command. Furthermore, users often use the "reply" command for the unrelated purpose of avoiding the re-typing of an email address.

However, while the patent does create a message thread taking these aspects into consideration, it is also conceivable that within such a discussion thread, only some of the messages are made redundant by other messages within the thread. For example, there can be two different replies (one agreeing and one disagreeing) to the first message in the thread, which both repeat the contents of the first message in its entirety. In this case, the first message is made redundant by either of the two replies, but neither of the two replies are made redundant by each other. The patent does not identify such non-redundant messages.

A further attempted solution to the redundant message problem is disclosed in US patent 5404488, which discloses a multiplexed messaging system for real-time data feeds. In this system, messages are conceptually pre-classified into groups. For example, in financial data feeds, the messages are about stock prices and are pre-classified by their stock symbols. This multiplexing system typically caches the messages for a short amount of time and for each group (e.g., stock symbol), only the latest message in that group is kept (e.g., most recent share price). While such a result may assist in eliminating redundant messages, it also eliminates all information about previous messages in the same group (e.g., history of the share price).

There is therefore a need for a more flexible and accurate approach for eliminating or identifying redundant electronic messages.

The present invention seeks to overcome or ameliorate at least one of the problems of the prior art.

### Summary of the Invention

According to one aspect, the present invention provides a method of determining if a message is repeated in a list of other messages in a messaging system, characterized in including the steps of at least partially removing formatting symbols from a first message and the list of other messages, said step being hereinafter called cleansing, comparing the cleansed first message with the cleansed list of other messages to determine whether the first message is repeated in the list of messages; and determining that where at least a portion of the first cleansed message occurs in the list of cleansed messages, the first message is repeated in the list of other messages.

According to another aspect, the pre sent invention provides a method of eliminating redundant messages from message information storage means, characterized in including the steps of copying a plurality of messages in the message information storage means into a first array and a second array; at least partially removing formatting symbols from the messages in this first array said step being hereinafter called cleansing, comparing the messages in the cleansed first array in order to detect repeated messages; for each repeated message of the first array detected in the cleansed second array, nullifying a corresponding message in the second array; and substituting the plurality of messages in the message information storage means with the messages in the second array.

In a further aspect the present invention provides a computer program product including a computer usable medium having computer readable program code and computer readable system code embodied on said medium for eliminating redundant messages from message information storage means within a data processing system, said computer program product being characterized in further including computer readable code within said computer usable medium for: at least partially removing formatting symbols from a plurality of messages in the message information storage means said step being hereinafter called cleansing; comparing the cleansed messages to determine if at least some of the contents of one or more cleansed messages is repeated in one or more of the other cleansed messages; and eliminating each repeated message from the message information storage means.

The present invention has particular applicability to email messages in user's email folder and newsgroup postings.

In this regard, the present invention is able to determine whether one message is made redundant by another message in the situations:
- where the first message is repeated or quoted in a contiguous block in the other message;
- where the first message is broken up into blocks and each block separately repeated or quoted in the other message;
- where the first message is broken up into blocks and each block is repeated or quoted by at least one of the other messages.

The present invention also provides for the elimination of entire email messages in a selective way so that the information in the eliminated email messages is not lost. In this regard it is to be appreciated that the present invention does not require the construction of message threads.

### Brief Description of the Drawings

The present invention will now be described with reference to the accompanying drawings, in which:
Figure 1 illustrates, by flowchart, a method according to an embodiment of the invention, whereby redundant messages are removed from a message file.
Figure 2 illustrates, by flowchart, a method according to an embodiment of the invention for determining whether a message is repeated within a list of messages.

### Detailed Description

The following examples illustrate several different email formats that may result where a "global" reply to an email message sent to a group of people quotes the email message in its entirety and recipients in that group see both the original message and the reply which contains a copy of the original message.
Suppose Adam sent out this following email message (Msg #1):
from: adam@one.org
to: bob@two.com, carl@three.com, dave@four.org,
ed@five.com
subject: need your advice on two matters
date: 2000 April 21 11 pm
Guys, I just had a big fight with Vivian. I don't want to go out with her any more. But I don't know how to tell her. How do you suggest I approach this?
Adam
Ps. Last night Nasdaq had a big fall. You think Celera is now a good buy?

In a first scenario, Bob responds to Msg #1 with the following email message (Msg #2):
from: bob@two.com
to: adam@one.org
cc: carl@three.com, dave@four.org, ed@five.com
date: 2000 April 21 11:30pm
Adam: a. You can't drop Vivian. b. Chiron is a safer bet. -Bob.
> from: adam@one.org
> to: bob@two.com, carl@three.com, dave@four.org,
ed@five.com
> subject: need your advice on two matters
>
> Guys, I just had a big fight with Vivian. I don't want to go out
> with her any more. But I don't know how to tell her. How do
> you suggest I approach this?
> Adam
> Ps. Last night Nasdaq had a big fall. You think Celera is now
> a good buy?
>

If Carl, Dave, and Ed had not yet read Msg #1, then in view of Msg #2, Msg #1 would be redundant to Carl, Dave, and Ed because its contents has been quoted in entirety in a single block within Msg #2.

Next, consider the scenario where Carl responds to Msg #1 with the following email message (Msg #3):
from: carl@three.com
to: adam@one.org
cc: bob@two.com, carl@three.com, dave@four.org,
ed@five.com
subject: re: need your advice on two matters
date: 2000 April 21 11:30pm
> Guys, I just had a big fight with Vivian. I don't want to go out
> with her any more. But I don't know how to tell her. How do
> you suggest I approach this?
What are you whining about. Didn't I tell you she was too possessive for you?
> Ps. Last night Nasdaq had a big fall. You think Celera is now
> a good buy?
Go for it at no more than $100 per share.
-Carl.

If Bob, Dave, and Ed have not yet read Msg #1, then in view of Msg #3, Msg #1 would be redundant to Bob, Dave, and Ed because its contents had been quoted in entirety (in two separate blocks) within Msg #3. In fact, even if a line or two of Msg #1 is omitted in Msg #2, such as the line "you suggest I approach this?", it could still be regarded as redundant.

It is to be appreciated that this type of reply differs from that of Msg #2 in that the reply is divided into two separate blocks rather than just as one block.

The next scenario is where Dave responds to Msg #1 in two separate email messages. This first is this message (Msg #4):
from: dave@four.com
to: adam@one.org
cc: bob@two.com, carl@three.com, ed@five.com
subject: re: need your advice on two matters
date: 2000 April 21 11:20pm
Why don't you tell her frankly that you find her very difficult?
Explain to her exactly how you feel about her. -D.
-----quoted message from adam@one.org-----
Guys, I just had a big fight with Vivian. I don't want to go out with her any more. But I don't know how to tell her. How do you suggest I approach this?

The second message (Msg #5) is:
from: dave@four.com
to: adam@one.org
cc: bob@two.com, carl@three.com, ed@five.com
subject: re: need your advice on two matters
date: 2000 April 21 11:30pm
I think the risk is high. But at $100, it is worth buying a few lots.
-D.
--quoted message from adam@one.org-----
Ps. Last night Nasdaq had a big fall. You think Celera is now a good buy?

If Bob, Carl, and Ed had not yet read Msg #1, then in view of Msg #4 and Msg #5, Msg #1 would be redundant to Bob, Carl, and Ed because its contents had been quoted in entirety in two separate blocks within Msg #4 and Msg #5.

However, if Dave did not "cc" Msg #4 to Bob, Carl, and Ed, then Msg #1 could not be considered redundant to these three people because they would not know about Adam's frustration about Vivian otherwise.

This scenario illustrates the possibility of an email message being repeated in part by two separate email messages, which, when put together, effectively quote the original message in its entirety. Further it is to be appreciated that Dave's email messaging system used another convention for quoting messages by using a message separator "-----quoted message from so-and-so----".

Suppose Bob, Carl, and Dave responded as described above before Ed logged in the next morning. From the perspective of Ed, Msg #1 was definitely redundant because its contents was clearly repeated by Msg #2-#5.

From these examples it is apparent that redundant emails are not necessarily quoted as a single contiguous block. Instead, the email may be split into multiple blocks and each block is quoted separately. The present invention is therefore intended to be able to recognise redundant messages in messaging systems that use various "reply" conventions, as well as messages created by users in various formats, including those described in the above example.

### Cleansing of Email Messages

According to one embodiment of the present invention, the first step for eliminating redundant email messages is to cleanse the messages of as much irrelevant formatting information as possible. The types of formatting information contained in an email message will vary depending upon the conventions used by a particular messaging system. However, in general, most include the following information, which is preferably removed during this step:
- header information (such as "to:", "from:", "subject:", and "date:");
- white spaces such as tab, carriage-return, new-line, space, etc.;
- punctuation symbols such as comma, semi-colon, colon, and period;
- email messaging system-specific forwarding and quoting symbols such as >-prefixes and "----"-message separators;

If the email messaged is HTML-formatted, this step may also include the removal of all HTML-formatting information.

During this cleansing step, it is also possible, but not essential, to:
- convert all letters into lowercase (or all into uppercase);
- remove signature information; and
- if the message is formatted by common means, such as MSword, lotus notes, etc, remove other layout and formatting information peculiar to these systems.

Most email messaging systems use one of several common conventions for quoting email messages, such as those referred to above as well as signing off their messages. A person skilled in the art would be able to implement a procedure to recognize these quoting symbols and ways of signing off and eliminate them. A more specialised procedure could also be developed for the small number of email messaging systems that do not use these common conventions.

Once the required removal steps have been performed, the next step is to reduce each email message body into a single string of characters, including as little irrelevant information as possible. Here are examples from three of the above sample messages.

Msg #1 after cleansing could be like this (note that we inserted some new lines and spaces to make it printable. In an actual implementation, it would be one single long contiguous line of letters):
guysijusthadabigfightwithvivianidontwanttogooutwithheranymorebuti
dontknowhowtotellherhowdoyousuggestiapproachthisadampslastnig
htnasdaqhadabigfallyouthinkceleraisnowagoodbuy

Msg #2 after cleansing could be like this (the quoted part from Msg #1 highlighted in bold purely for convenience of discussion, in an actual implementation, it would be same as the rest of the long string of letters):
adamayoucantdropvivianbchironisasaferbetbob**guysijusthadabigfi**
**ghtwithvivianidontwanttogooutwithheranymorebutidontknowh**
**owtotellherhowdoyousuggestiapproachthisadampslastnightna**
**sdaqhadabigfallyouthinkceleraisnowagoodbuy**

Msg #3 after cleansing could be like this (quoted part from Msg #1 highlighted in bold for convenience of discussion):
**guysijusthadabigfightwithvivianidontwanttogooutwithheranym**
**orebutidontknowhowtotellherhowdoyousuggestiapproachthisw**
hatareyouwhiningaboutdidntitoldyoushewastoopossessiveforyoupsl
**astnightnasdaqhadabigfallyouthinkceleraisnowagoodbuy**goforit
atnomorethan$100pershare-carl

After the above cleansing, it is immediately clear that the cleansed version of Msg #1 is a sub-string of the cleansed version of Msg #2. However, with respect to the cleansed version of Msg #3, Msg #1 is still separated into two pieces and part of it (the signature line "Adam") is missing.

Note that this particular failure involving signature "Adam" is for illustration purpose only. It is unlikely in actuality because it is a relatively conventional sign-off and should be recognised and removed in a signature removal procedure. Nevertheless, Carl, who wrote Msg #3, could very well have omitted some other lines of Msg #1 instead of just the signature line of Msg #1. Then a similar failure would still occur, depending on whether those omitted lines were considered relevant or not.

### Detection of Repetition in Email Messages

Next, consider a cleansed email message *M* and a list of other cleansed email messages *M*₁, ..., *M*_{*n*}. We want to detect if *M* is repeated in *M*₁, ..., *M*_{*n*} in such a way that *M* can be largely reconstructed from *M*₁, ..., *M*_{*n*}.

A first method is to test if *M* appears as a substring in any of *M*₁, ..., *M*_{*n*}. Examples of substring testing algorithms that may be used include the Boyer-Moore algorithm [RS Boyer, JS Moore. "A fast string searching algorithm", *Comm. ACM,* 20:762--772, 1977] and the Knuth-Morris-Pratt algorithm [DE Knuth, JH Morris, VB Pratt. "Fast pattern matching in strings", *SIAM J. Comput.,* 6:323--350, 1977.]

This method, however, only detects a repeated message where *M* is quoted as a contiguous block of letters in any of these messages. Nevertheless, it is a very efficient method:

A second method is to concatenate *M*₁, ..., *M*_{*n*} into a single string and check if this string can be divided into (possibly empty) segments *T*₁*S*₁...*T*_{*m*}*S*_{*m*}*T*_{*m*+1} such that *S*₁...*S*_{*m*} is equal to *M*. This method works even if *M* is quoted in several non-contiguous parts *S*₁, ..., *S*_{*m*} either by a single email message amongst *M*₁, ..., *M*_{*n*}, or by a plurality of email messages amongst *M*₁, ..., *M*_{*n*}. This method fails, however, if some unimportant lines of *M* are not quoted by any of these messages. It can also fail if the segments *S*₁, ..., *S*_{*m*} are all too short (for example, each one is a single letter). The second kind of failure is a theoretical one and is extremely unlikely to happen in practice.

In a further method, a small percentage of *S*₁, ..., *S*_{*m*} are allowed to remain unmatched in *M*₁, ..., *M*_{*n*}. This method therefore allows for some unimportant lines of *M* to be lost. One way to implement this form of comparison is to treat *M* and the concatenation of *M*₁, ..., *M*_{*n*} as two strings to be aligned and use dynamic string alignment algorithms, such as those used in the field of protein and DNA sequence comparison [TF Smith, MS Waterman. "Identification of Common Molecular Subsequences", *J. Mol*. *Biol*., 147:195-197, 1981; SB Needleman, CD Wunsch. "A General Method Applicable to the Search for Similarities in the Amino Acid Sequence of Two Proteins", *J. Mol*. *Biol*., 48:444--453, 1970; D. Gusfield. *Algorithms on Strings, Trees, and Sequences,* Cambridge University Press, 1997, Chapter 11.] These algorithms may therefore be applied in the present situation for the purpose of detecting if an email message is repeated in a list of other email messages.

The three methods described above have different degrees of efficiency. The first method is the most efficient and the last is the least efficient. However, the sensitivity of the methods is in inverse relation to their efficiency. Overall, it would be preferable to utilise a method that combined efficiency with sensitivity.

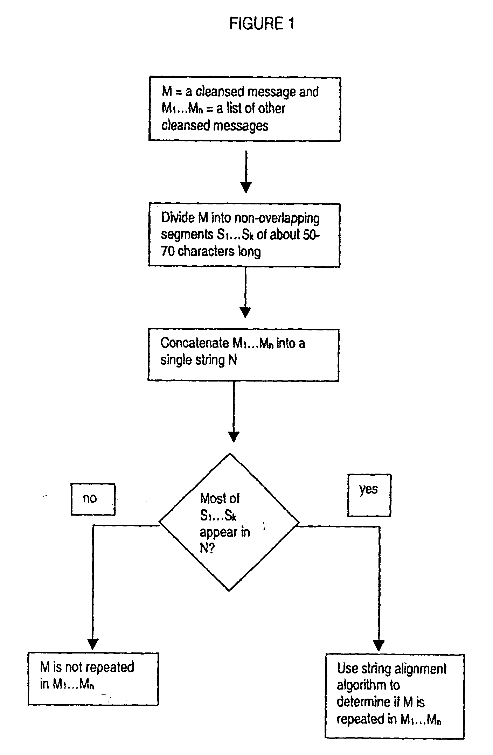

In this regard, a further method according to an embodiment of the present invention takes advantage of the characteristics of typical emails. A typical email message uses text lines of about h characters long , where h is preferably a number in the 50-70 range. If that email message is repeated or quoted in a significant way by some other email messages, most of the lines in the first message would appear in these other messages. Therefore it is preferable to use a fast substring test to determine if most of the lines in the first email message are repeated in other email messages before an expensive alignment is performed. Thus a fourth method is as follows:
- Divide *M* into non-overlapping segments *S*₁, ..., *S*_{*k*}, each of about 50-70 characters long;
- Concatenate *M*₁, ..., *M*_{*n*} into a single string *N*.
- If most (for example, 60%) of *S*_{*1*},..., *S*_{*k*} do not appear as a substring in *N*, then report that *M* is not repeated in *M*_{*1*},...,*M*_{*n*}.
- Otherwise, use the string alignment method to decide whether *M* is repeated in *M*_{*1*},...,*M*_{*n*}.
   This process is illustrated in Figure 1 by way of a flowchart. It is to be appreciated that it is unnecessary to test all of *S*_{*1*}*,*..., *S*_{*k*}; only a sufficient number of them need be tested in order to decide whether to proceed with the alignment step.

Therefore, it is apparent that by implementing one or more of these procedures, it is possible to analyse a plurality of electronic messages to ascertain whether any messages are repeated and therefore redundant.

### Elimination of Redundant Email Messages

In a further embodiment of the present invention, the foregoing is implemented in a method for eliminating redundant email messages from a user's email message file (or folder or system). In this further embodiment, such a method includes the following steps:
- Copy the email messages into an array *EMAIL[1,..n]*, in increasing order to the date of these email messages;
- Copy *EMAIL[1..n]* into another array *CLEANSED[1..n]*.
- Apply the cleansing method to each email message in *CLEANSED[1..n]*. Thus *CLEANSED[1..n]* now stores the cleansed version of the email messages;
- For each *i* from *1* to *n-1* do:
   - Apply the email message repetition detection method to determine if *CLEANSED[1..n]* is repeated in *CLEANSED[i+1..n]*. (Note that, since *CLEANSED[1..n]* is ordered in increasing order of email message date, we do not need to check *CLEANSED[i]* against *CLEANSED[1..i]*.)
   - If *CLEANSED[i]* is found to be repeated, then set *EMAIL[l]* to empty.
- Replace the user's email message file by the contents of *EMAIL[1..n]*, omitting those entries that are empty.

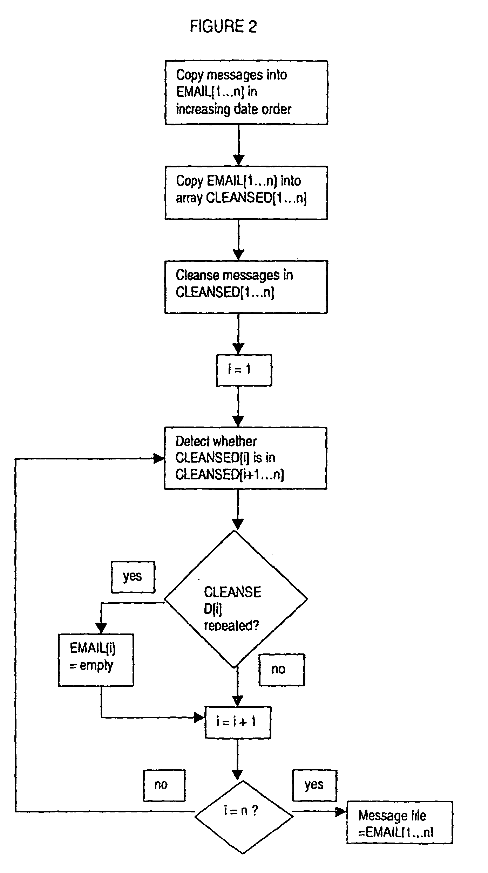

In this way, repeated messages are earmarked as "empty" and hence removed from the user's email message file. This process is illustrated in Figure 2 by way of a flowchart.

In another application of the present invention, it is to be appreciated that redundant postings on USENET newsgroups and bulletin board services may also arise in the same manner as redundant email messages. Therefore, the present invention may also be applied to eliminated redundant postings from these newsgroups and bulletin board services.

### Deployment Scenarios

The redundant-email elimination method may be deployed as an independent program to be invoked by the user. For example, when the user invokes the program and supplies the name of the email message file or folder to be "cleansed", the program would carry out the elimination of redundant email messages and update the user's email message file or folder.

Alternatively, the method could be deployed as a component of an email messaging software. Such software could be incorporated into existing email messaging software such as Netscape Mail, Elm, Eudora, etc. In this regard, an extra button or menu option could be added to perform the elimination of redundant email messages using a method of the present invention.

In the application of the present invention to a USENET newsgroup or bulletin board, the method may similarly be deployed as a component of the access software.

## Claims

1. Method of determining if a first message is repeated in a list of other messages in a messaging system, **characterized in** including the steps of:
at least partially removing formatting symbols from the first message and the list of other messages said step being hereinafter called cleansing;
comparing the cleansed first message with the cleansed list of other messages to determine whether the first message is repeated in the list of other messages; and
determining that where at least a portion of the first cleansed message occurs in the list of cleansed messages, the first message is repeated in the list of other messages.

2. Method of claim 1, wherein the comparing step further includes:
dividing the cleansed message into a plurality of segments;
concatenating the cleansed list of messages into a single string; and
comparing each segment with the single string to determine whether at least a substantial proportion of the plurality of segments occur in the single string.

3. Method of claim 2 wherein the plurality of segments are non-overlapping segments.

4. Method of claim 2 wherein if a substantial proportion of the segments do occur in the single string, the method further includes the step of using a string alignment algorithm to determine if the message is repeated in the list of other messages.

5. Method of claim 1 or 2 wherein the messages are newsgroup postings and the method is used to determine whether a newsgroup posting is repeated or quoted either in a contiguous block or in separate parts in one or more of the messages in the list of other messages.

6. Method of claim 1 or 2 wherein the messages are email messages which are stored in email storage means, and the method is used to determine whether an email message is repeated or quoted either in a contiguous block or in separate parts in one or more of the messages in the list of other messages.

7. Method of claim 6 further including the step of:
eliminating the first message from the email storage means where it is at least substantially repeated in the list of other messages.

8. Method of eliminating redundant messages from message information storage means, **characterized in** including the steps of:
copying a plurality of messages in the message information storage means into a first array and a second array;
at least partially removing formatting symbols from the messages in the first array said step being hereinafter called cleansing;
comparing the messages in the cleansed first array in order to detect repeated messages;
for each repeated message of the first array detected in the cleansed second array, nullifying a corresponding message in the second array; and
substituting the plurality of messages in the message information storage means with the messages in the second array.

9. Method of claim 8, wherein the message are copied into the first array in increasing date order, and the comparing step involves comparing each message in the cleansed first array with all subsequent message in the array.

10. Method of claim 1 or 8 wherein the cleansing step involves at least one of the following:
removal of header information;
removal of white spaces;
removal of punctuation symbols;
removal of forwarding and quoting symbols;
removal of message separators;
removal of HTML formatting information;
removal of signature information;
conversion of all letters to upper or lower case.

11. Computer program product including a computer usable medium having computer readable program code and computer readable system code embodied on said medium for eliminating redundant messages from message information storage means within a data processing system, said computer program product being **characterized in** further including computer readable code within said computer usable medium for:
at least partially removing formatting symbols from a plurality of messages in the message information storage means said step being hereinafter called cleansing;
comparing the cleansed messages to determine if at least some of the contents of one or more cleansed messages is repeated in one or more of the other cleansed messages; and
eliminating each repeated message from the message information storage means.

12. Computer program product of claim 11 wherein the computer readable code is further adapted to provide a graphical user interface with a menu option for eliminating redundant email messages from a user's email message file.

13. Computer program product of claim 11 wherein the computer readable code is further adapted to perform the method according to any one of claims 2 to 10 for determining the redundancy of an email message.

14. Computer program product of claim 11, wherein the computer readable code is further adapted to eliminate messages wherein the messages are newsgroup postings in a user's newsgroup history, configuration or other files.

## Patentansprüche

1. Verfahren zum Bestimmen, ob eine erste Nachricht in einer Liste von anderen Nachrichten in einem Nachrichtensystem wiederholt wird, **dadurch gekennzeichnet, dass** es die Schritte aufweist:
des zumindest teilweisen Entfernens von Formatierungszeichen aus der ersten Nachricht und der Liste anderer Nachrichten, wobei dieser Schritt im Folgenden Bereinigen genannt wird;
des Vergleichens der bereinigten ersten Nachricht mit der bereinigten Liste der anderen Nachrichten, um zu bestimmen, ob die erste Nachricht in der Liste von anderen Nachrichten wiederholt wird; und
des Bestimmens, dass, wo zumindest ein Teil der ersten bereinigten Nachricht in der Liste der bereinigten Nachrichten auftritt, die erste Nachricht in der Liste von anderen Nachrichten wiederholt wird.

2. Verfahren nach Anspruch 1, wobei der Vergleichsschritt ferner aufweist:
Teilen der bereinigten Nachricht in eine Mehrzahl von Segmenten;
Verknüpfen der bereinigten Liste von Nachrichten zu einer einzelnen Zeichenkette; und
Vergleichen jedes Segments mit der einzelnen zeichenkette, um zu bestimmen, ob zumindest ein wesentlicher Teil der Mehrzahl von Segmenten in der einzelnen Zeichenkette auftritt.

3. Verfahren nach Anspruch 2, wobei die Mehrzahl der Segmente nichtüberlappende Segmente sind.

4. Verfahren nach Anspruch 2, wobei, falls ein wesentlicher Teil der Segmente in der einzelnen Zeichenkette auftritt, das Verfahren ferner den Schritt des Anwendens eines Zeichenketten-Abgleich-Algorithmus aufweist, um zu bestimmen, ob die Nachricht in der Liste von anderen Nachrichten wiederholt wird.

5. Verfahren nach Anspruch 1 oder 2, wobei die Nachrichten Newsgroup-Nachrichten sind und das Verfahren verwendet wird, um zu bestimmen, ob eine Newsgroup-Nachricht entweder in einem zusammenhängenden Block oder in separaten Teilen in einer oder mehreren der Nachrichten in der Liste von anderen Nachrichten wiederholt oder zitiert wird.

6. Verfahren nach Anspruch 1 oder 2, wobei die Nachrichten Email-Nachrichten sind, welche in einer Email-Speichereinrichtung gespeichert sind und das Verfahren verwendet wird, um zu bestimmen, ob eine Email-Nachricht entweder in einem zusammenhängenden Block oder in separaten Teilen in einer oder in mehreren der Nachrichten in der Liste von anderen Nachrichten wiederholt oder zitiert wird.

7. Verfahren nach Anspruch 6, welches ferner den Schritt aufweist des:
Eliminierens der ersten Nachricht von der Email-Speichereinrichtung, bei der sie zumindest im Wesentlichen in der Liste von anderen Nachrichten wiederholt wird.

8. Verfahren des Eliminierens redundanter Nachrichten von einer Nachrichten-Informations-Speichereinrichtung, **dadurch gekennzeichnet, dass** es die Schritte aufweist:
des Kopierens einer Mehrzahl von Nachrichten in der Nachrichten-Informations-Speichereinrichtung in ein erstes Feld und in ein zweites Feld;
des zumindest teilweisen Entfernens von Formatierungszeichen von den Nachrichten in dem ersten Feld, wobei dieser Schritt im Folgenden Bereinigen genannt wird;
des Vergleichens der Nachrichten in dem bereinigten ersten Feld, um wiederholte Nachrichten zu erfassen;
des Löschens einer entsprechenden Nachricht in dem zweiten Feld für jede wiederholte Nachricht des ersten Feldes, die in dem bereinigten zweiten Feld erkannt wird; und
des Ersetzens der Mehrzahl von Nachrichten in der Nachrichten-Informations-Speichereinrichtung durch die Nachrichten in dem zweiten Feld.

9. Verfahren nach Anspruch 8, wobei die Nachrichten in das erste Feld in zeitlich aufsteigender Reihenfolge kopiert werden, und wobei der Vergleichsschritt ein Vergleichen jeder Nachricht in dem bereinigten ersten Feld mit allen nachfolgenden Nachrichten in dem Feld aufweist.

10. Verfahren nach Anspruch 1 oder 8, wobei der Bereinigungsschritt zumindest einen der folgenden Punkte aufweist:
Entfernung von Header-Informationen;
Entfernung von Leerzeichen;
Entfernung von Interpunktionszeichen;
Entfernung von Weiterleitungs- und Zitierzeichen;
Entfernung von Nachrichten-Trennzeichen;
Entfernung von HTML-Formatierungsinformationen;
Entfernung von Signaturinformationen;
Umwandlung von allen Buchstaben in Groß- oder Kleinbuchstaben.

11. Computerprogramm-Produkt, welches ein computernutzbares Medium aufweist, dass einen computerlesbaren Programmcode und einen computerlesbaren Systemcode aufweist, die auf dem Medium verkörpert sind, zum Eliminieren redundanter Nachrichten von einer Nachrichten-Informations-Speichereinrichtung innerhalb eines Datenverarbeitungssystems, wobei das Computerprogramm-Produkt **dadurch gekennzeichnet ist, dass** es ferner einen computerlesbaren Code innerhalb des computernutzbaren Mediums aufweist zum:
zumindest teilweisen Entfernen von Formatierungszeichen von einer Mehrzahl von Nachrichten in der Nachrichten-Informations-Speichereinrichtung, wobei dieser Schritt im Folgenden Bereinigen genannt wird;
Vergleichen der bereinigten Nachrichten, um zu bestimmen, ob zumindest etwas von den Inhalten einer oder mehrerer bereinigter Nachrichten in einer oder mehreren der anderen bereinigten Nachrichten wiederholt wird; und
Eliminieren jeder wiederholten Nachricht von der Nachrichten-Informations-Speichereinrichtung.

12. Computerprogramm-Produkt nach Anspruch 11, wobei der computerlesbare Code ferner dafür eingerichtet ist, eine graphische Benutzeroberfläche mit einer Menüoption zum Eliminieren redundanter Email- Nachrichten von einer Benutzer-Email-Nachrichtendatei bereitzustellen.

13. Computerprogramm-Produkt nach Anspruch 11, wobei der computerlesbare Code ferner dafür eingerichtet ist, das Verfahren gemäß irgendeinem der Ansprüche 2 bis 10 zum Bestimmen der Redundanz einer Email-Nachricht durchzuführen.

14. Computerprogramm-Produkt gemäß Anspruch 11, wobei der computerlesbare Code ferner dafür eingerichtet ist, Nachrichten zu eliminieren, wobei die Nachrichten Newsgroup-Nachrichten in einer Benutzer-Newsgroup-History-Datei, einer Konfigurationsdatei oder in anderen Dateien sind.

## Revendications

1. Procédé pour déterminer si un premier message est répété dans une liste d'autres messages d'un système de messagerie **caractérisé en ce qu'**il comprend les étapes consistant à :
retirer au moins en partie les symboles de formatage du premier message et de la liste d'autres messages, ladite étape étant appelée ci-après nettoyage ;
comparer le premier message nettoyé à la liste nettoyée d'autres messages afin de déterminer si le premier message est répété dans la liste d'autres messages ; et
déterminer que là où au moins une partie du premier message nettoyé apparaît dans la liste de messages nettoyés, le premier message est répété dans la liste d'autres messages.

2. Procédé selon la revendication 1, dans lequel l'étape de comparaison comprend de plus :
la division du message nettoyé en une pluralité de segments ;
la concaténation de la liste de messages nettoyée en une chaîne unique ; et
la comparaison de chaque segment à la chaîne unique afin de déterminer si au moins une proportion substantielle de la pluralité de segments apparaît dans la chaîne unique.

3. Procédé selon la revendication 2, dans lequel la pluralité de segments sont des segments sans recouvrement.

4. Procédé selon la revendication 2, dans lequel une partie substantielle des segments apparaît dans la chaîne unique, le procédé comprend de plus l'étape consistant à utiliser un algorithme d'alignement de chaîne afin de déterminer si le message est répété dans la liste d'autres messages.

5. Procédé selon la revendication 1 ou 2, dans lequel les messages sont des contributions à des groupes de discussion et le procédé est utilisé afin de déterminer si une contribution à un article de forum est répétée ou citée soit dans un bloc contigu soit dans des parties séparées dans un ou plusieurs des messages dans la liste des autres messages.

6. Procédé selon la revendication 1 ou 2, dans lequel les messages sont des messages de type courriels qui sont stockés dans des moyens de stockage de courriels, et le procédé est utilisé pour déterminer si un message de type courriel est répété ou cité soit dans un bloc contigu soit dans des parties séparées dans un ou plusieurs des messages de la liste d'autres messages.

7. Procédé selon la revendication 6 comprenant de plus les étapes consistant à éliminer le premier message des moyens de stockage de courriels où il est au moins en grande partie répété dans la liste des autres messages

8. Procédé d'élimination de messages redondants de moyens de stockage d'informations de messages **caractérisé en ce qu'**il comprend les étapes consistant à :
copier une pluralité de messages dans les moyens de stockage d'informations de messages dans un premier tableau et dans un deuxième tableau ;
enlever au moins en partie les symboles de formatage des messages dans le premier tableau, ladite étape étant appelée ci-après nettoyage ;
comparer les messages dans le premier tableau nettoyé afin de détecter des messages répétés ;
pour chaque message répété du premier tableau détecté dans le deuxième tableau nettoyé, annuler un message correspondant dans le deuxième tableau; et remplacer la pluralité de messages dans les moyens de stockage d'informations de messages par les messages dans le deuxième tableau.

9. Procédé selon la revendication 8, dans lequel les messages sont copiés dans le premier tableau en ordre croissant par date, et l'étape de comparaison implique la comparaison de chaque message dans le premier tableau nettoyé à tous les messages ultérieurs dans le tableau.

10. Procédé selon la revendication 1 ou 8 dans lequel l'étape de nettoyage implique au moins une tâche parmi les suivantes :
enlèvement de l'information d'en-tête ;
enlèvement des espaces blancs ;
enlèvement des symboles de ponctuation ;
enlèvement des symboles de suivi et de citation ;
enlèvement des séparateurs de messages :
enlèvement de l'information de formatage HTML ;
enlèvement de l'information de signature ;
conversion de toutes les lettres en majuscules ou en minuscules.

11. Produit de type programme d'ordinateur comprenant un support utilisable par un ordinateur ayant un code de programme lisible par ordinateur et un code système lisible par ordinateur mis en oeuvre sur ledit support pour éliminer des messages redondants des moyens de stockage d'informations de messages à l'intérieur d'un système de traitement de données, ledit produit de type programme d'ordinateur étant **caractérisé en ce qu'**il comprend de plus un code lisible par ordinateur à l'intérieur dudit support utilisable par ordinateur pour :
enlever au moins en partie les symboles de formatage d'une pluralité de messages dans les moyens de stockage d'informations de messages ladite étape étant ci-après appelée nettoyage ;
comparer les messages nettoyés afin de déterminer si au moins une partie du contenu de l'un ou de plusieurs des messages nettoyés est répétée dans un ou plusieurs des autres messages nettoyés ; et
éliminer chaque message répété des moyens de stockage d'information de message.

12. Produit de type programme d'ordinateur selon la revendication 11 dans lequel le code lisible par ordinateur est de plus fait pour fournir une interface graphique à l'utilisateur avec une option menu pour éliminer les messages de courriels redondants d'un fichier de message de courriels d'utilisateur.

13. Produit de type programme d'ordinateur selon la revendication 11, dans lequel le code lisible par l'ordinateur est de plus fait pour réaliser le procédé selon l'une quelconque des revendications 2 à 10 afin de déterminer la redondance d'un message de type courriel.

14. Produit de type programme d'ordinateur selon la revendication 11, dans lequel le code lisible par ordinateur est de plus fait pour éliminer des messages dans lesquels les messages sont des articles de forum dans un historique de forum d'un utilisateur, une configuration ou autres fichiers.
